(19)

**Europäisches Patentamt**
**European Patent Office**
**Office européen des brevets**

(11) **EP 4 764 940 A1**

(12) **EUROPEAN PATENT APPLICATION**

(43) Date of publication:
**24.06.2026 Bulletin 2026/26**

(21) Application number: **24425060.1**

(22) Date of filing: **19.12.2024**

(51) International Patent Classification (IPC):
***G06F 40/30*** (2020.01)      ***G06F 40/56*** (2020.01)
***G06N 3/0475*** (2023.01)

(52) Cooperative Patent Classification (CPC):
**G06F 40/30; G06F 40/56; G06N 3/045;**
**G06N 3/0475**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Luxottica S.r.l.**
**32021 Agordo (BL) (IT)**

(72) Inventors:
• **Casale, Giuliano**
**London, SW7 2PG (GB)**

• **Ongarello, Tommaso**
**32021 Agordo (BL) (IT)**
• **Palermo, Francesca**
**32021 Agordo (BL) (IT)**
• **Shreshth, Tuli**
**London, UB1 1GA (GB)**
• **Trojaniello, Diana**
**32021 Agordo (BL) (IT)**
• **Roveri, Manuel**
**20133 MILANO (MI) (IT)**

(74) Representative: **Biallo, Dario et al**
**Barzanò & Zanardo S.p.A.**
**Via Borgonuovo, 10**
**20121 Milano (IT)**

(54) **COMPUTER IMPLEMENTED METHOD FOR OBTAINING AN OUTPUT RESPONSE TO A NATURAL LANGUAGE INPUT PROMPT**

(57)     Computer implemented method for obtaining an output response to a natural language input prompt, the output response being generated by a language model selected from a group of language models, comprising the steps:
- receiving the input prompt;
- determining a complexity score of the input prompt;
- determining a time-criticality score of the input prompt;
- for each language model, computing a quality of service score related to the combination of the language model and the input prompt, on the basis of the complexity score of the input prompt, the time-criticality score of the input prompt, a stored response quality function of the language model and a stored latency function of the language model;
- selecting a selected language model on the basis of the computed quality service;
- forwarding the input prompt to the selected language model;
- receiving the output response generated by the selected language model on the basis of the input prompt.

Fig. 1

**Description**

The present invention refers to a computer implemented method for obtaining an output response generated by a language model on the basis of a natural language input prompt, and to a wearable device comprising computing means configured to execute such a method.

In the field of natural language processing, language models, and in particular large language models (also known as LLMs), have been developed and used for a wide variety of tasks, including speech recognition, machine translation, natural language generation and AI assistance.

With particular reference to AI assistants, several LLMs have been proposed to generate a swift output response on the basis of a natural language input prompt formulated by a user, and this variety enables users to choose the LLM that each time best fits their specific use-case requirements. However, the deployment of these LLMs as AI assistants in Internet of Things (IoT) edge devices, such as wearable devices and in particular smart glasses, presents significant challenges.

In fact, running even a single high-performance LLM directly on an edge device requires large computational and memory resources, inevitably increasing the weight and the dimensions of the device. In the case of smart glasses, this would make the device impractical and even painful to wear. On the other hand, the use of a simpler LLM would compromise the overall performance of the AI assistant, providing the user with low quality and/or late output responses.

As an alternative, the edge device might take advantage of cloud-based LLMs, to which the edge device might forward the input prompt using an Internet connection in order to receive an output response. Considering the wide variety of available cloud-based LLMs, it would be desirable to forward the input prompt to the cloud-based LLM that best fits the user needs, instead of randomly selecting a cloud-based LLM between the ones available: the random selection, in fact, provides the user with a suboptimal average quality of the output responses.

An object of the present invention is to overcome the above-mentioned drawbacks and in particular to set up a computer implemented method for obtaining an output response to a natural language input prompt, generated by the LLM that best fits the user needs in order to provide the user with the optimal output response, that requires limited computational and memory resources. Another object of the present invention is to realize a wearable device comprising computing means configured to execute the above-mentioned method, such device being comfortable to wear and easy to use.

These and other results are achieved according to the present invention setting up a computer implemented method according to claim 1, and a wearable device according to claim 12.

Further preferred characteristics are the object of the dependent claims.

The present invention will be now described, in an illustrative and non-limiting way, referring to the attached schematic drawings, in which:

- figure 1 is a sketch illustrating a particular implementation of a computer implemented method according to the present invention;
- figure 2 is a schematic drawing of the operational logic of the step of determining a complexity score and a time-criticality score of the input prompt.

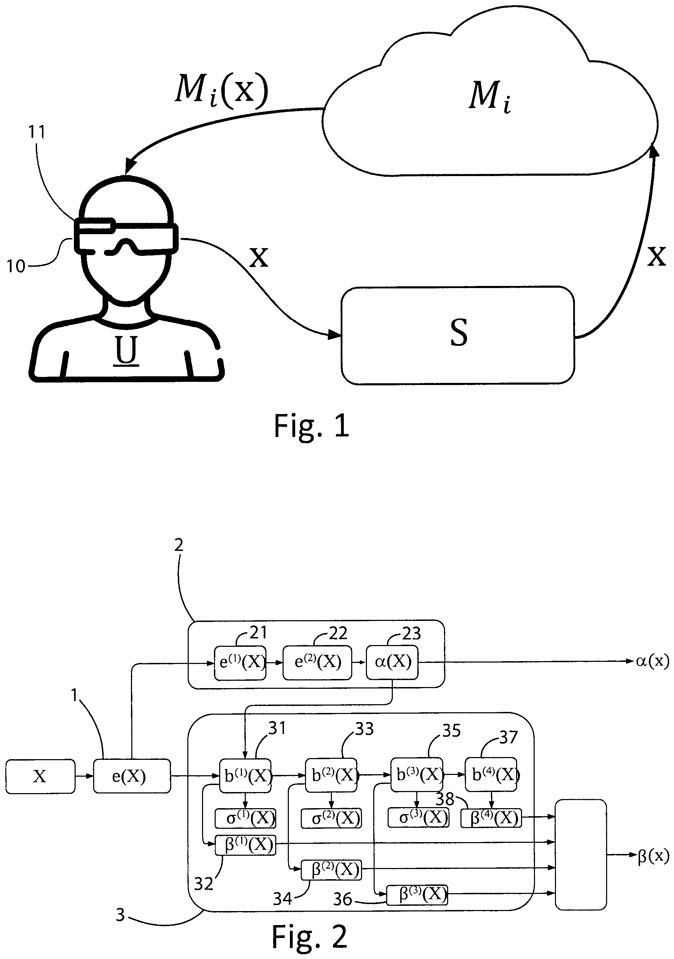

With reference to figure 1, the computer implemented method according to the present invention allows to obtain an output response $M_i(x)$ to a natural language input prompt x formulated by a user U, the output response $M_i(x)$ being generated by a language model $M_i$, in particular a large language model.

The input prompt x could be any question formulated in natural language by the user U, such as "What is the height of the Eiffel tower?", or any other request of information such as "Tell me how to set up this desk.".

On the other hand, the output response $M_i(x)$ will be the answer to the formulated question ("The Eiffel tower is 312 metres high."), or the information requested ("Take the piece A and connect it with the piece B, then take the piece C and..."). The output response $M_i(x)$ is generated by a language model $M_i$ selected from a language model group G of N possible language models $M_i$, and the method comprises a selection procedure S set up to select a selected language model $M_i$ that is used to generate the output response $M_i(x)$ to the input prompt x.

Determination of the complexity score and the time-criticality score

First of all, the input prompt x is received, and a complexity score $\alpha(x)$ and a time-criticality score $\beta(x)$ of the input prompt x are determined. Preferably both the complexity score $\alpha(x)$ and the time-criticality score $\beta(x)$ of the input prompt x are comprised between 0 and 1. For example, the input prompt "Tell me how to heat milk." has a complexity score $\alpha(x)$ close to 0, while the input prompt "Tell me how to design an aircraft." has a complexity score $\alpha(x)$ close to 1. On the other hand, the input prompt "Give me some game suggestions." has a time-criticality score $\beta(x)$ close to 0, while the input prompt "How do I treat my wasp sting immediately?" has a time-criticality score $\beta(x)$ close to 1.

With reference to figure 2, preferably both the complexity score $\alpha(\textbf{x})$ and the time-criticality score $\beta(\textbf{x})$ of the input prompt x are determined on the basis of a text embedding $\textbf{e(x)}$ of the input prompt x, and not directly from the input prompt x. In fact, it has been noted that text embedding neural networks 1 (such as Sentence-Bert and Jina-Bert) provide text embeddings $\textbf{e(x)}$ that capture the semantic meaning of the input prompt x well enough to determine its complexity score $\alpha(\textbf{x})$ and time-criticality score $\beta(\textbf{x}),$ limiting the overall computational and memory resources necessary to determine the complexity score $\alpha(\textbf{x})$ and the time-criticality score $\beta(\textbf{x})$ of the input prompt x.

Preferably, the complexity score $\alpha(\textbf{x})$ of the input prompt x is determined using a transformer neural network 2. In fact, the self-attention mechanism in transformers allows the model to weigh the importance of different parts of the input prompt x dynamically. This is particularly useful for understanding the context and nuances in natural language, which is crucial for accurately assessing the complexity of the input prompt x. Further, transformers excel at capturing long-range dependencies and contextual relationships within the input prompt x. Complexity in language often arises from such dependencies, where the meaning and difficulty of an input prompt x can depend on the interplay between distant words or phrases. Transformers are well-suited to handle these dependencies effectively.

More in particular, the transformer neural network 2 comprises a first feed-forward layer 21, a transformer 22 and a second feed-forward layer 23, such that:

$$e^{(1)}(x) = FeedForward\big(e(x)\big)$$

$$e^{(2)}(x) = Transformer\left(e^{(1)}(x)\right)$$

$$\alpha(x) = FeedForward\left(e^{(2)}(x)\right)$$

In fact, the first feed-forward layer 21 and the second feed-forward layer 23 help reduce the size of the input prompt x and consequently the memory footprint of the model.

Preferably, the complexity score $\alpha(\textbf{x})$ of the input prompt x is used to determine the time-criticality score $\beta(\textbf{x})$ of the input prompt x.

In fact, the complexity of an input prompt x is often tied to measurable factors such as the length of the input prompt x, the syntactic and semantic intricacy, and the need for advanced language understanding or generation capabilities. These factors are generally more straightforward to quantify and analyze using established natural language processing techniques. Further, complexity prediction relies more on the intrinsic properties of the input prompt x rather than external factors. This intrinsic focus makes it less context-dependent compared to time-criticality, which can be influenced by external and situational factors.

Allowing complexity score $\alpha(\textbf{x})$ prediction to be used as a guiding prior for time-criticality score $\beta(\textbf{x})$ prediction facilitates in mitigating challenges such as dependence on external factors such as the current state of the user U, the environment, or the specific application requirements. These factors can be dynamic and fluctuate in real-time, adding complexity to the prediction process and requiring long-horizon multi-step reasoning. Finally, unlike time-criticality, there exist well-defined metrics and features in natural language processing to assess the complexity of text, such as syntactic tree depth, number of entities, sentiment analysis, and lexical diversity. These features can be extracted from the input prompt x and used to train models that predict complexity with relatively high accuracy.

More in particular, the time-criticality score $\beta(\textbf{x})$ of the input prompt x is determined also on the basis of the complexity score $\alpha(\textbf{x})$ of the input prompt x using an early-exit neural network 3. The early-exit neural network 3 is designed to provide exit points at different layers of the network, allowing the model to stop processing once a confident prediction is made and ensuring that the system can quickly respond to urgent prompt inputs x without unnecessary computation.

The early-exit neural network 3 has a number of exits n that preferably is equal to four. The first exit comprises a third feed-forward layer 31 and a fourth feed-forward layer 32, and provides a first binary class output $\sigma^{(1)}(\textbf{x})$ and a first time-criticality score prediction $\beta^{(1)}(\textbf{x}),$ such that:

$$b^{(1)}(x) = FeedForward\big(e(x), \alpha(x)\big)$$

$$\sigma^{(1)}(x) = sigmoid\left(FeedForward\left(b^{(1)}(x)\right)\right)$$

$$\beta^{(1)}(x) = FeedForward\left(b^{(1)}(x)\right)$$

The second exit comprises a fifth feed-forward layer 33 and a sixth feed-forward layer 34, and provides a second binary class output $\sigma^{(2)}(x)$ and a second time-criticality score prediction $\beta^{(2)}(x)$, such that:

$$b^{(2)}(x) = FeedForward\left(b^{(1)}(x)\right)$$

$$\sigma^{(2)}(x) = sigmoid\left(FeedForward\left(b^{(2)}(x)\right)\right)$$

$$\beta^{(2)}(x) = FeedForward\left(b^{(2)}(x)\right)$$

The third exit comprises a seventh feed-forward layer 35 and an eighth feed-forward layer 36, and provides a third binary class output $\sigma^{(3)}(x)$ and a third time-criticality score prediction $\beta^{(3)}(x)$, such that:

$$b^{(3)}(x) = FeedForward\left(b^{(2)}(x)\right)$$

$$\sigma^{(3)}(x) = sigmoid\left(FeedForward\left(b^{(3)}(x)\right)\right)$$

$$\beta^{(3)}(x) = FeedForward\left(b^{(3)}(x)\right)$$

The fourth exit comprises a ninth feed-forward layer 37 and a tenth feed-forward layer 38, and provides a fourth time-criticality score prediction $\beta^{(4)}(x)$, such that:

$$b^{(4)}(x) = FeedForward\left(b^{(3)}(x)\right)$$

$$\beta^{(4)}(x) = FeedForward\left(b^{(4)}(x)\right)$$

The binary class output $\sigma^{(i)}(x)$ is a prediction of whether to exit at the i-th exit, while the time-criticality score prediction $\beta^{(i)}(x)$ is the output of the i-th exit.

The binary class output $\sigma^{(i)}(x)$ allows to exit early; in particular the time-criticality score $\beta(x)$ of the input prompt x is determined as the earliest time-criticality score prediction $\beta^{(i)}(x)$ such that the prediction of the corresponding binary class output $\sigma^{(i)}(x)$ is positive, and all the previous binary class outputs $\sigma^{(i)}(x)$ are negative. Specifically:

$\beta(x) = \beta^{(k)}(x) \mid [\sigma^{(k)}(x) > 0.5) \wedge (\sigma^{(i)}(x) < 0.5 \ \forall \ i < k)]$

Training of the transformer neural network and the early-exit neural network

Preferably, the transformer neural network 2 and the early-exit neural network 3 are trained minimizing an overall loss function L given by a linear combination of a first loss function $L_1$, related to the complexity score $\alpha(x)$ and the time-criticality score $\beta(x)$ of the input prompt x, and a second loss function $L_2$ related to the binary class output $\sigma^{(i)}(x)$ of the early exit neural network. A control hyperparameter $\lambda$ is defined such that:

$$L = L_1 + \lambda \cdot L_2$$

This linear combination allows balancing the trade-off between the accuracy of the scores $\alpha(x)$, $\beta(x)$ and the effectiveness of the early-exit mechanism.

More in particular, the training is based on a training dataset Y comprising a training total m of training prompts $y_i$. The training dataset Y is preferably a fraction of a larger dataset such as MT Bench or HH Bench.

For each training prompt $y_i$, a ground truth complexity score $\hat{\alpha}(y_i)$ and a ground truth time-criticality score $\hat{\beta}(y_i)$ are determined, preferably using a high-parameter large language model as judge language model, for example GPT-4o.

The first loss function $L_1$ is defined as the mean squared error between the scores $\alpha(y_i)$, $\beta(y_i)$ determined by the neural networks 2, 3 on the basis of the training prompts $yi$, and the ground truth scores $\hat{\alpha}(y_i)$, $\hat{\beta}(y_i)$ determined on the basis of the same training prompts $y_i$. Specifically:

$$L_1 = \frac{1}{m} \sum_{i=1}^{m} \left[ \left( \alpha(y_i) - \hat{\alpha}(y_i) \right)^2 + \left( \beta(y_i) - \hat{\beta}(y_i) \right)^2 \right]$$

For each training prompt $y_i$ and for each exit k, a ground truth binary class output $\hat{\sigma}^{(k)}(y_i)$ is determined using a discretization threshold t: when the time-criticality score prediction $\beta^{(k)}(y_i)$ differs from the ground truth time-criticality score $\hat{\beta}(y_i)$ of less than the discretization threshold t, then the ground truth binary class output $\hat{\sigma}^{(k)}(y_i)$ is 1, else 0. Specifically:

$$\hat{\sigma}^{(k)}(y_i) = Id\left[ \left| \beta^{(k)}(y_i) - \hat{\beta}(y_i) \right| \le t \right]$$

Preferably the discretization threshold t is equal to 0.5. By setting the discretization threshold t, we ensure that the model only exits early if the predictions are sufficiently accurate. This prevents premature exits that could lead to significant errors in the final predictions.

For each training prompt $y_i$ and for each exit k, a binary cross-entropy function $L_2^{(k)}(y_i)$ is determined on the basis of the ground truth binary class output $\hat{\sigma}^{(k)}(y_i)$ and the binary class output $\sigma^{(k)}(y_i)$. Specifically:

$$L_2^{(k)}(y_i) = -\left[ \hat{\sigma}^{(k)}(y_i) \log\left( \sigma^{(k)}(y_i) \right) + \right.$$
$$\left. + \left( 1 - \hat{\sigma}^{(k)}(y_i) \right) \log\left( 1 - \sigma^{(k)}(y_i) \right) \right]$$

The second loss function $L_2$ is defined on the basis of the binary cross-entropy function $L_2^{(k)}(y_i)$. Specifically:

$$L_2 = \frac{1}{m} \sum_{i=1}^{m} \sum_{k=1}^{n-1} L_2^{(k)}(y_i)$$

Preferably, the control hyperparameter $\lambda$ is equal to 1. Computation of the quality of service score and selection of the selected language model

For each language model $M_i$ of the language model group G, a response quality function $\tilde{\mu}(M_i)$ of the language model $M_i$ and a latency function $\tilde{\phi}(M_i)$ of the language model $M_i$ are stored in memory. When the complexity score $\alpha(x)$ and the time-criticality score $\beta(x)$ of the input prompt x have been determined, a quality of service score $QoS(x, M_i)$ related to the combination of each language model $M_i$ and the input prompt x is computed as follows:

$$QoS(x, M_i) = \alpha(x) \cdot \tilde{\mu}(M_i) + \beta(x) \cdot \tilde{\phi}(M_i)$$

The response quality function $\tilde{\mu}(M_i)$ of the language model $M_i$ is computed on the basis of the quality of the responses generated, i.e. the correctness and the helpfulness. Preferably, the of response quality function $\tilde{\mu}(M_i)$ of the language model $M_i$ is computed on the basis the response quality scores $\mu(y, M_i)$ of the responses $M_i(y)$ generated by the language model $M_i$ on the basis of the training prompts y, using also a confidence level hyperparameter z. Specifically:

$$\tilde{\mu}(M_i) = Mean_{y \in Y}(\mu(y, M_i)) - z \cdot \frac{SD_{y \in Y}(\mu(y, M_i))}{\sqrt{m}}$$

where the symbol "SD" represents the standard deviation function.

Preferably the response quality score $\mu(y, M_i)$ of a response $M_i(y)$ generated by each language model $M_i$ on the basis of the training prompt y is determined using a judge language model. In this case, the judge language model is asked to determine the response quality score $\mu(y, M_i)$ considering correctness and helpfulness of the response $M_i(y)$.

On the other hand, the latency function $\tilde{\phi}(M_i)$ of the language model $M_i$ is computed on the basis of the time employed by the language model $M_i$ to generate the responses. Preferably, the latency function $\tilde{\phi}(M_i)$ of the language model $M_i$ is computed on the basis of the latency scores $\phi(y, M_i)$ of the responses $M_i(y)$ generated by the language model $M_i$ on the basis of the training prompts y. Specifically:

$$\tilde{\phi}(M_i) = Mean_{y \in Y}(\phi(y, M_i)) - z \cdot \frac{SD_{y \in Y}(\phi(y, M_i))}{\sqrt{m}}$$

Preferably the latency score $\phi(y, M_i)$ of a response $M_i(y)$ generated by the language model $M_i$ on the basis of the training prompt y is computed as:

$$\phi(y, M_i) = 1 - \frac{t(y, M_i) - \min_{M_j \in G}\left(t(y, M_j)\right)}{\max_{M_j \in G}\left(t(y, M_j)\right) - \min_{M_j \in G}\left(t(y, M_j)\right)}$$

wherein $t(y, M_i)$ is the time employed by the language model $M_i$ (selected from the language model group G) to generate the response $M_i(y)$ on the basis of the training prompt y.

Preferably, the confidence level hyperparameter z is comprised between 1.40 and 1.50, in particular 1.44.

Finally, the language model $M_i$ whose quality of service score $QoS(x, M_i)$ computed on the basis of the input prompt x is the highest is chosen as the selected language model $M_i$. The input prompt x is forwarded to the selected language model $M_i$, and the output response $M_i(x)$ generated by the selected language model $M_i$ on the basis of the input prompt x is received.

This selection procedure S allows to make informed decisions about which language model $M_i$ to deploy for a given task by considering both the quality and latency in a conservative manner.

The computer implemented method according to the present invention also minimizes the computational and memory resources necessary to obtain the output response $M_i(x)$ to the natural language input prompt x, since the output response $M_i(x)$ is obtained by slow and high-quality language models $M_i$ only when the time-criticality score $\beta(x)$ of the input prompt x is low, and the output response $M_i(x)$ is obtained by fast and low-quality language models $M_i$ only when the complexity score $\alpha(x)$ of the input prompt x is low. In turn, when the method is run on an IoT edge device, this allows to reduce the weight and the dimensions of the device itself; in the case of smart glasses, this makes the device comfortable to wear and easy to use.

<u>Wearable device</u>

Preferably, the computer implemented method is executed by computing means 11 of a wearable device 10 (visible in figure 1), in particular a head-mountable device, more in particular smart glasses, that can be worn by the user U.

The device 10 comprises also input means configured to collect the natural language input prompt x formulated

6

by the user U, and to forward the input prompt x to the computing means 11; the device 10 comprises also output means configured to receive the output response $M_i(x)$ obtained by the computing means 11 and to provide the user U with the output response $M_i(x)$.

The input means can comprise a microphone configured to collect a vocal input prompt x formulated by the user.

The output means can comprise a speaker configured to provide the user U with an audible output response $M_i(x)$. The output means comprise also a display configured to provide the user U with a visible output response $M_i(x)$. The visible output response $M_i(x)$ could be projected on a lens of the device 10.

The present invention has been described in an illustrative and non-limiting way according to relative favorite embodiments, but it is clear that the person skilled in the art could perform many variations and modifications, all of which are within the scope of the invention.

**Claims**

1. Computer implemented method for obtaining an output response ($M_i(x)$) to a natural language input prompt (x), the output response ($M_i(x)$) being generated by a language model ($M_i$) selected from a language model group (G) of language models ($M_i$), comprising the steps:

   - receiving the input prompt (x);
   - determining a complexity score ($\alpha(x)$) of the input prompt (x);
   - determining a time-criticality score ($\beta(x)$) of the input prompt (x);
   - for each language model ($M_i$), computing a quality of service score ($QoS(x, M_i)$) related to the combination of the language model ($M_i$) and the input prompt (x), on the basis of the complexity score ($\alpha(x)$) of the input prompt (x), the time-criticality score ($\beta(x)$) of the input prompt (x), a stored response quality function ($\tilde{\mu}(M_i)$) of the language model ($M_i$) computed on the basis of a quality of the responses generated by the language model ($M_i$), and a stored latency function ($\tilde{\phi}(M_i)$) of the language model ($M_i$) computed on the basis of a time employed by the language model ($M_i$) to generate responses;
   - selecting a selected language model ($M_i$) on the basis of the computed quality service score ($QoS(x, M_i)$) ;
   - forwarding the input prompt (x) to the selected language model ($M_i$);
   - receiving the output response ($M_i(x)$) generated by the selected language model ($M_i$) on the basis of the input prompt (x).

2. Method according to claim 1, wherein the complexity score ($\alpha(x)$) and the time-criticality score ($\beta(x)$) of the input prompt (x) are determined on the basis of a text embedding ($e(x)$) of the input prompt (x).

3. Method according to any of the preceding claims, wherein the complexity score ($\alpha(x)$) of the input prompt (x) is determined using a transformer neural network (2) .

4. Method according to any of the preceding claims, wherein the time-criticality score ($\beta(x)$) of the input prompt (x) is determined also on the basis of the complexity score ($\alpha(x)$) of the input prompt (x).

5. Method according to claim 4, wherein the time-criticality score ($\beta(x)$) of the input prompt (x) is determined using an early-exit neural network (3).

6. Method according to claim 5, when dependent in turn from claim 3, wherein the transformer neural network (2) and the early-exit neural network (3) are trained minimizing an overall loss function (L) given by a linear combination of a first loss function ($L_1$) and a second loss function ($L_2$), wherein the first loss function ($L_1$) is a mean squared error function related to the complexity score ($\alpha(x)$) and the time-criticality score ($\beta(x)$), and the second loss function ($L_2$) is a binary cross-entropy loss function related to a binary class output ($\sigma^{(i)}(x)$) of the early-exit neural network (3).

7. Method according to any of the preceding claims, wherein the quality of service score ($QoS(x, M_i)$) related to the combination of the language model ($M_i$) and the input prompt (x) is computed on the basis of the complexity score ($\alpha(x)$) of the input prompt (x), the time-criticality score ($\beta(x)$) of the input prompt (x), the response quality function ($\tilde{\mu}(M_i)$) of the language model ($M_i$), and the latency function ($\tilde{\phi}(M_i)$) of the language model ($M_i$), as:

$$QoS(x, M_i) = \alpha(x) \cdot \tilde{\mu}(M_i) + \beta(x) \cdot \tilde{\phi}(M_i)$$

8. Method according to claim 7, wherein the response quality function ($\tilde{\mu}(M_i)$) and the latency function ($\tilde{\phi}(M_i)$) of the language model ($M_i$) are computed on the basis of a training dataset (Y) comprising a training total (m) of training prompts ($y_j$), a response quality score ($\mu(y, M_i)$) of a response ($M_i(y)$) generated by the language model ($M_i$) on the basis of the training prompt y, a latency score ($\phi(y, M_i)$) of the response ($M_i(y)$) generated by the language model ($M_i$) on the basis of the training prompt (y), and a confidence level hyperparameter (z), as:

$$\tilde{\mu}(M_i) = Mean_{y \in Y}(\mu(y, M_i)) - z \cdot \frac{SD_{y \in Y}(\mu(y, M_i))}{\sqrt{m}}$$

$$\tilde{\phi}(M_i) = Mean_{y \in Y}(\phi(y, M_i)) - z \cdot \frac{SD_{y \in Y}(\phi(y, M_i))}{\sqrt{m}}$$

9. Method according to claim 8, wherein the response quality score ($\mu(y, M_i)$) of the response ($M_i(y)$) generated by each language model ($M_i$) on the basis of the training prompt (y) is determined using a judge language model.

10. Method according to claim 8 or claim 9, wherein the latency score ($\phi(y, M_i)$) of the response ($M_i(y)$) generated by the language model ($M_i$) on the basis of the training prompt (y) is computed on the basis of the time ($t(y, M_i)$) employed by the language model ($M_i$) to the generate the response ($M_i(y)$) on the basis of the training prompt (y), as:

$$\phi(y, M_i) = 1 - \frac{t(y, M_i) - \min_{M_j \in G}\left(t(y, M_j)\right)}{\max_{M_j \in G}\left(t(y, M_j)\right) - \min_{M_j \in G}\left(t(y, M_j)\right)}$$

11. Method according to any of claims 8 to 10, wherein the confidence level hyperparameter (z) is comprised between 1.40 and 1.50, in particular 1.44.

12. Wearable device (10), in particular head-mountable device, that can be worn by a user (U), comprising:

    - computing means (11) configured to execute a method according to any of claims 1 to 11;
    - input means configured to collect the input prompt (x) formulated by the user (U) and to forward the input prompt (x) to the computing means (11);
    - output means configured to receive the output response ($M_i(x)$) obtained by the computing means (11) and to provide the user (U) with the output response ($M_i(x)$).

13. Device (10) according to claim 12, wherein the input means comprise a microphone configured to collect a vocal input prompt (x) formulated by the user (U).

14. Device (10) according to any of claims 12 or 13, wherein the output means comprise a speaker configured to provide the user (U) with an audible output response ($M_i(x)$).

15. Device (10) according to any of claims 12 to 14, wherein the output means comprise a display configured to provide the user (U) with a visible output response ($M_i(x)$).

Fig. 1

Fig. 2

| | Europäisches Patentamt<br>European Patent Office<br>Office européen des brevets | **EUROPEAN SEARCH REPORT** | **Application Number**<br>EP 24 42 5060 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 12 153 611 B1 (MADISETTI VIJAY [US] ET AL) 26 November 2024 (2024-11-26)<br>* figures 9,10 *<br>* column 3, line 1 - line 37 *<br>* column 7, line 55 - line 56 *<br>----- | 1-11 | INV.<br>G06F40/30<br>G06F40/56<br>G06N3/0475 |
| X | Xu Zhenyu ET AL: "Can Large Language Models Be Good Companions? An LLM-Based Eyewear System with Conversational Common Ground",<br>,<br>30 November 2023 (2023-11-30),<br>XP093276505,<br>Retrieved from the Internet:<br>URL:https://www.researchgate.net/publicati on/376456486_Can_Large_Language_Models_Be_ Good_Companions_An_LLM-Based_Eyewear_Syste m_with_Conversational_Common_Ground [retrieved on 2025-05-12]<br>* Introduction;<br>figure 2 *<br>* section 3.1 *<br>----- | 12-15 | |
| | | | **TECHNICAL FIELDS SEARCHED (IPC)** |
| A | Malec Melissa: "Large Language Model Use Cases: One LLM vs Multiple Models",<br>,<br>20 March 2024 (2024-03-20), XP093276701,<br>Retrieved from the Internet:<br>URL:https://hatchworks.com/blog/gen-ai/llm -use-cases-single-vs-multiple-models/ [retrieved on 2025-05-12]<br>* the whole document *<br>----- | 1-15 | G06F<br>G06N |

The present search report has been drawn up for all claims

| Place of search | Date of completion of the search | Examiner |
|---|---|---|
| Berlin | 14 May 2025 | Lechenne, Laurence |

## ANNEX TO THE EUROPEAN SEARCH REPORT
## ON EUROPEAN PATENT APPLICATION NO.

EP 24 42 5060

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | | Publication date | Patent family member(s) | | Publication date |
|---|---|---|---|---|---|
| US 12153611 | B1 | 26-11-2024 | US | 12001462 B1 | 04-06-2024 |
| | | | US | 12147461 B1 | 19-11-2024 |
| | | | US | 12153611 B1 | 26-11-2024 |
| | | | US | 12153612 B1 | 26-11-2024 |
| | | | US | 2024370472 A1 | 07-11-2024 |
| | | | US | 2024386043 A1 | 21-11-2024 |
| | | | US | 2024394289 A1 | 28-11-2024 |
| | | | US | 2024403338 A1 | 05-12-2024 |
| | | | US | 2025045310 A1 | 06-02-2025 |
| | | | US | 2025061138 A1 | 20-02-2025 |
| | | | US | 2025077553 A1 | 06-03-2025 |
| | | | US | 2025094457 A1 | 20-03-2025 |
| | | | US | 2025094459 A1 | 20-03-2025 |
| | | | US | 2025094461 A1 | 20-03-2025 |

EPO FORM P0459

For more details about this annex : see Official Journal of the European Patent Office, No. 12/82